(19) **Europäisches Patentamt**
**European Patent Office**
**Office européen des brevets**

(11) **EP 4 411 550 B1**

(12) **EUROPEAN PATENT SPECIFICATION**

(45) Date of publication and mention
of the grant of the patent:
**25.03.2026 Bulletin 2026/13**

(21) Application number: **23155227.4**

(22) Date of filing: **06.02.2023**

(51) International Patent Classification (IPC):
**G06Q 20/02** (2012.01)       **G06Q 20/38** (2012.01)
**G06F 11/3668** (2025.01)

(52) Cooperative Patent Classification (CPC):
**G06Q 20/027; G06F 11/3684; G06F 11/3688;**
**G06F 11/3692; G06Q 20/385**

(54) **DIFFERENTIAL TESTING METHOD OF TRANSACTION PROCESSING SYSTEMS**

DIFFERENTIELLES TESTVERFAHREN FÜR TRANSAKTIONSVERARBEITUNGSSYSTEME

PROCÉDÉ DE TEST DIFFÉRENTIEL DE SYSTÈMES DE TRAITEMENT DE TRANSACTION

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(43) Date of publication of application:
**07.08.2024 Bulletin 2024/32**

(73) Proprietor: **Mastercard International Incorporated**
**Purchase, NY 10577 (US)**

(72) Inventors:
• **RAGHAVAN, Mohan**
**600034 Chennai (IN)**
• **GROARKE, Peter**
**Dublin 18 (IE)**
• **PRABHA, Jyoti**
**801505 Patna (IN)**

(74) Representative: **Keltie LLP**
**No. 1 London Bridge**
**London SE1 9BA (GB)**

(56) References cited:
**US-A1- 2015 127 547     US-A1- 2022 129 368**
**US-B1- 9 836 388**

• -: "PCI DSS Quick Reference Guide version
3.2.1", 31 July 2018 (2018-07-31), New York,
pages 1 - 39, XP055888429, Retrieved from the
Internet <URL:https://www.
pcisecuritystandards.org/documents/
PCI_DSS-QRG-v3_2_1.pdf?agreement=true>
[retrieved on 20220207]

EP 4 411 550 B1

**Description**

Field of Disclosure

The present disclosure relates to a differential testing method of transaction processing systems. In embodiments, the disclosure relates to a method.

Background to Disclosure

A transaction network may involve interactions between a number of different entities, for example, a cardholder, a merchant, an acquirer and an issuer. The acquirer is the bank or financial institution that provides services for car pricing to a merchant and the issuer is the bank or other financial institution that has issued a transaction slash payment card to a card holder.

Within this transaction network, transaction infrastructure in the form of a payments which routes transaction messages between the acquirer to the issuer bank. In addition to routine transaction messages between the acquirer and issuer, my payments which may also be responsible for brokering messages out to a Value Added Services (VAS) system. Such a VAS system may come up for example, include loyalty services, payment transaction restrictions, card limits etc associated with the transaction card of a particular card holder.

The components of the transaction network, have evolved over many years as additional transaction functionality is added to the transaction system. Over time therefore such systems may become quite complicated and this may become an issue whether is a need to either replicate the functionality of the existing system or to upgrade the hardware or software the existing system.

Before providing a new payments system to handle live transaction traffic, it is necessary to test such a new system to ensure that it is accurately replacing the legacy system. Undertaking such differential testing within the context of a financial system which is subject to Payment Card Industry Data Security Standards (PCI DSS), an information security standard that sets out requirements for transaction systems, is challenging. In particular, such testing of a new payment components such as a payment switch needs to be mindful that live transaction card data is not exposed or misrouted as a result of an incorrectly configured payment component.

Existing techniques of testing a new payment component before incorporation into a live transaction environment may comprise testing the payment component within a development environment rather than a production environment or alternatively may comprise using of copies of real transaction data in a special test or silent transaction mode.

In a silent mode test copies of real transaction data may be passed through the new payment component but such copied transaction data may be enhanced with a transaction flag that identifies it as a test transaction to the transaction infrastructure. Such a transaction flag may also be sent on to a value added services system. For value added services system may previously have been informed that trend test transactions are going to be sent to it and a request may have been made for such test transactions to be processed in the same way as live transaction data.

Once such silent mode transactions have been sent through the transaction infrastructure a validator system may compare the silent mode transactions to the original real live transactions that went through the current production environment payments and any differences between the two may be highlighted.

There are disadvantages to this silent mode approach, for example real transaction data might be exposed which would thereby expose customer payment card details. Such an approach is also reliant on the transaction infrastructure being set up correctly to receive such cloned transactions during the silent mode test. It is also noted that because such silent mode transactions will be accompanied by a transaction flag, then from the point of view of any component within the transaction infrastructure, for example the value added services system, the silent mode transactions that are received will vary slightly from real transactions and so the silent mode test may not be a true test of the capabilities of the new payment component.

US9836388 describes software testing of a candidate software system and in some examples, an interceptor intercepts at least one production request to a production software system. US2015/127547 describes methods, apparatuses, computer readable media and systems for providing, along with a token, a token assurance level and data used to generate the token assurance level.

The present disclosure has been devised to address and mitigate the above mentioned problems.

Summary of Disclosure

According to a first aspect of the present disclosure there is provided a computer-implemented method of testing a transaction component within a production environment of a transaction system against a legacy transaction component, the transaction component being configured to route transaction messages between an issuer and an acquirer during a cardholder transaction using a transaction card having a primary account number (PAN), the method comprising:

receiving a transaction message, the transaction message comprising a plurality of data fields, one of the plurality of data fields comprising the PAN of the transaction card; associating the PAN with a shadow primary account number (PAN), the shadow PAN replicating the format of the PAN; creating a shadow transaction message, the shadow transaction message comprising a plurality of data fields, one of the plurality of data fields comprising the shadow PAN; sending the received transaction message to the legacy transaction component for processing; sending the shadow transaction message to the transaction component for processing; receiving a processed transaction message from the legacy component; receiving a processed shadow transaction message from the transaction component; comparing the data fields of the processed transaction message and processed shadow transaction message for any discrepancies wherein the PAN is associated with one or more PAN properties within a value added services system and the shadow PAN is configured to replicate the PAN properties of the PAN, the method comprising: sending a request to a value added services system to provide notification of any updates to the PAN properties of the PAN and, upon receiving a notification from the value added services system, updating the configuration of the shadow PAN to match the updated PAN properties of the PAN.

The present disclosure provides a method of testing a transaction component that is to be used within the production environment of a transaction system that currently comprises a legacy component (that will eventually be replaced by the transaction component once it has been tested). The method according to the first aspect of the present disclosure comprises receiving a transaction messages that are exchanged between an issuer and acquirer and to create a shadow transaction message that mirrors the actual transaction message. According to the method of the present disclosure the shadow transaction message comprises a shadow PAN which is used to replace the actual PAN contained in the received transaction message.

By using a shadow PAN the method according to the first aspect of the present disclosure is able to test the transaction component without using the cardholder's actual primary account number. The shadow PAN may be formatted to match the format of the real PAN and to mirror the history of the real PAN but to use proxy data.

The method according to the first aspect of the present disclosure therefore provides to receive a transaction message, comprising a plurality of data fields, one of which comprises the cardholder's PAN and to create a shadow transaction message that mirrors the received transaction message in which the shadow PAN is used in the shadow transaction message in place of the real PAN. The received transaction message, i.e. the real transaction message, is sent to the legacy transaction component in the normal way to be processed as it normally would be and the shadow transaction message is sent to the new transaction component to be processed. The processed transaction message and processed shadow transaction message are then compared to determine any discrepancies between the data fields of the two message, any such discrepancies indicating that there may be a software bug in the transaction component.

The transaction component may comprise a payment switch and the legacy component may comprise a legacy payment switch.

The shadow transaction message may be configured to replicate all the data fields of the received transaction message apart from the replacement of the PAN with the shadow PAN.

The PAN properties may comprise PAN configuration and PAN velocity data, the PAN configuration property comprising one or more of: loyalty scheme related data; transaction card spend limit settings; transaction alert notification settings and the PAN velocity property comprising the transaction history of the transaction card.

The transaction message may be a transaction request message received from a network component associated with the acquirer. The transaction message may be a transaction response message received from a network component associated with the issuer.

The transaction system may comprise a splitter component configured to receive the transaction message from the network component, associate the PAN with the shadow PAN, create the shadow transaction message and send the received transaction message to the legacy payment component and shadow transaction message to the payment component. The transaction system may also comprise a validator component which is configured to receive the processed transaction message from the legacy component and processed shadow transaction message from the payment component and to compare the data fields of the processed transaction message and processed shadow transaction message for any discrepancies.

The transaction system may comprise a splitter component configured to receive the transaction message from the network component, associate the PAN with the shadow PAN, create the shadow transaction message and send the received transaction message to the legacy payment component and shadow transaction message to the payment component; and a validator component which is configured to receive the processed transaction message from the legacy component and processed shadow transaction message from the payment component and to compare the data fields of the processed transaction message and processed shadow transaction message for any discrepancies, the splitter component and validator component being integrated into a single component within the transaction system.

The step of associating the PAN with the shadow PAN may comprise mapping the PAN to the shadow PAN. In particular, the PAN may comprise a bank identification number, an account number and a check digit and mapping the PAN to the shadow PAN may comprise replacing a bank identification number with a shadow BIN and recalculating the check digit.

Alternatively, the step of associating the PAN with the shadow PAN may comprise generating the shadow PAN using a random number generator and storing an association between the PAN and shadow PAN.

The method may comprise repeating the testing of the payment component by receiving further transaction messages and sending further shadow transaction messages to the transaction component until a predefined range of transaction messages have been received. The method may also or alternatively comprise repeating the testing of the payment component by receiving further transaction messages and sending further shadow transaction messages to the transaction component until a predetermined number of data field types have been tested.

According to an example useful for understanding the present disclosure there is provided a splitter component for use in a production environment of a transaction system to enable testing of a transaction component against a legacy transaction component, the transaction component being configured to route transaction messages between an issuer and an acquirer during a cardholder transaction using a transaction card having a primary account number (PAN), the splitter component comprising: an input configured to receive a transaction message, the transaction message comprising a plurality of data fields, one of the plurality of data fields comprising the PAN of the transaction card; a processor configured to: associate the PAN with a shadow primary account number (PAN), the shadow PAN replicating the format of the PAN; create a shadow transaction message, the shadow transaction message comprising a plurality of data fields, one of the plurality of data fields comprising the shadow PAN; an output configured to send the received transaction message to the legacy transaction component for processing.

According to an example useful for understanding the present disclosure, there is provided a validator component for use in a production environment of a transaction system to enable testing of a transaction component against a legacy transaction component, the transaction component being configured to route transaction messages between an issuer and an acquirer during a cardholder transaction using a transaction card having a primary account number (PAN), the splitter component comprising: an input configured to receive a transaction message that has been processed by the legacy component and to receive a shadow transaction message that has been processed by the transaction component, the shadow transaction message comprising a plurality of data fields, one of the plurality of data fields comprising a shadow PAN the shadow PAN replicating the format of a PAN; comparing the data fields of the processed transaction message and processed shadow transaction message for any discrepancies

The present disclosure extends to a computing device comprising a memory and a suitably programmed processor, wherein the computing device is adapted to carry out the method of the first aspect of the present disclosure.

It will be appreciated that similar benefits and advantages will be associated with the systems and devices implementing these methods as were described previously in association with the methods. In addition, corresponding additional (optional) features set out in respect of the above-described methods would also be equally applicable in respect of the respective systems and devices.

Within the scope of this application it is expressly intended that the various aspects, embodiments, examples or alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

Brief Description of the Drawings

One or more embodiments of the disclosure are now described, by way of example, with reference to the accompanying drawings, in which:

**Figure 1** shows schematically a distributed transaction architecture using a four-party model;

**Figure 2** illustrates elements of a complex distributed system adapted to implement the transaction architecture of Figure 1;

**Figure 3** shows a known transaction system receiving a transaction message from an acquirer;

**Figure 4** shows a known transaction system receiving a transaction message from an issuer;

**Figure 5** shows a transaction system in accordance with embodiments of the present disclosure receiving a transaction message from an acquirer;

**Figure 6** shows a transaction system in accordance with embodiments of the present disclosure receiving a transaction message from an issuer;

**Figure 7** shows a testing method in accordance with embodiments of the present disclosure.

Detailed Description

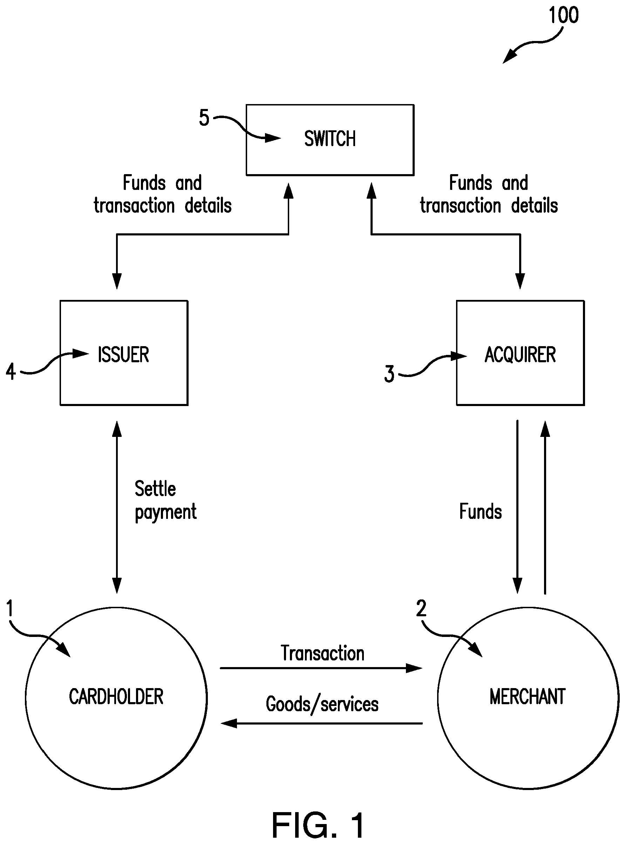

**Figure 1** is a block diagram of a typical four-party model for a payment transaction scheme. The diagram illustrates the entities present in the model and the interactions occurring between entities operating in a card scheme. Normally, card schemes - payment networks linked to payment cards - are based on one of two models: a three-party model or a four-party model (adopted by the present applicant). For the purposes of this document, the four-party model is described in further detail below.

The four-party model may be used as a basis for the transaction network. For each transaction, the model comprises four entity types: cardholder 1 (also referred to herein as "consumer"), merchant 2, acquirer 3 and issuer 4. In this model, the cardholder 1 purchases goods or services from the merchant 2. The issuer 4 is the bank or any other financial institution that issued the card to the cardholder 1. The acquirer 3 provides services for card processing to the merchant 2. The model also comprises a central switch 5 - interactions between the issuer 4 and the acquirer 3 are routed via the switch 5 (the switch is referred to in below as "transaction infrastructure"). The switch 5 enables a merchant 2 associated with one particular bank acquirer 3 to accept payment transactions from a cardholder 1 associated with a different bank issuer 4.

A typical transaction between the entities in the four-party model can be divided into two main stages: authorisation and settlement. The cardholder 1 initiates a purchase of a good or service from the merchant 2 using their card. Details of the card and the transaction are sent to the issuer 4 via the acquirer 3 and the switch 5 to authorise the transaction. The cardholder 1 may have provided verification information in the transaction, and in some circumstances may be required to undergo an additional verification process to verify their identity (such as 3-D Secure in the case of a remote transaction). Once the additional verification process is complete the transaction is authorized.

On completion of the transaction between the cardholder 1 and the merchant 2, the transaction details are submitted by the merchant 2 to the acquirer 3 for settlement. The transaction details are then routed to the relevant issuer 4 by the acquirer 3 via the switch 5. Upon receipt of these transaction details, the issuer 4 provides the settlement funds to the switch 5, which in turn forwards these funds to the merchant 120 via the acquirer 3.

Separately, the issuer 4 and the cardholder 1 settle the payment amount between them. In return, a service fee is paid to the acquirer 3 by the merchant 2 for each transaction, and an interchange fee is paid to the issuer 4 by the acquirer 3 in return for the settlement of funds.

In practical implementations of a four-party system model, the roles of a specific party may involve multiple elements acting together. This is typically the case in implementations that have developed beyond a contact-based interaction between a consumer card and a merchant terminal to digital implementations using proxy or virtual cards on user computing devices such as a smart phone.

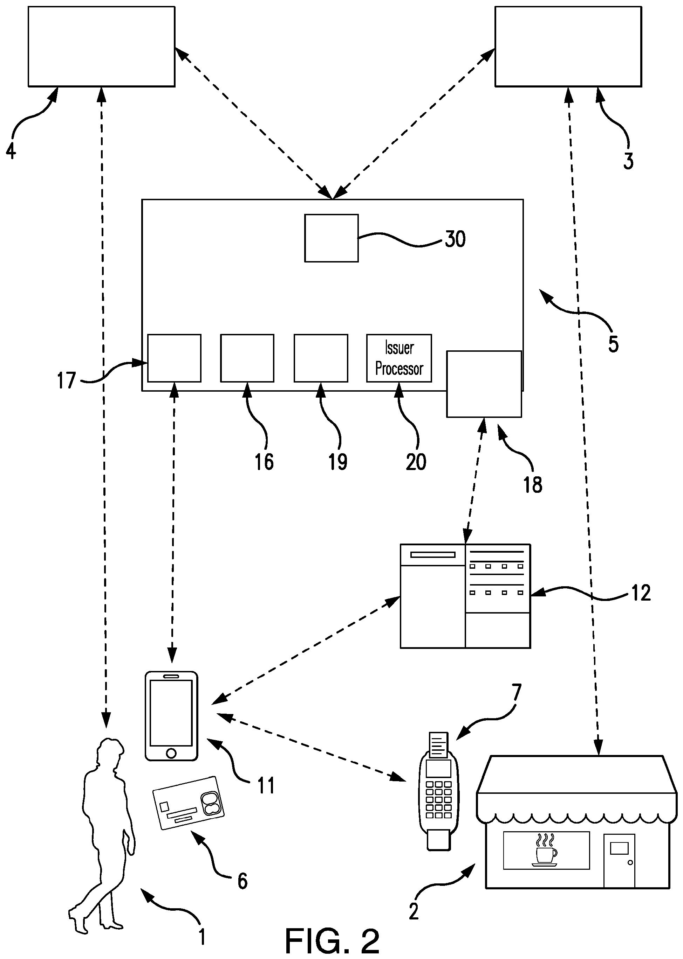

**Figure 2** shows an architecture appropriate for interaction between a cardholder and a merchant. This figure shows a general-purpose architecture for reference, but it shows elements of an architecture used when a cardholder carries out a transaction with a merchant server.

For a conventional transaction, a cardholder 1 will use their payment card 6 - or a mobile computing device such as smartphone 11 adapted for use as a contactless payment device - to transact with a POS terminal 7 of a merchant 2. However, in embodiments relevant to the present disclosure, the cardholder will use his or her computing device - which may be any or all of a cellular telephone handset, a tablet, a laptop, a static personal computer or any other suitable computing device (here cellular telephone handset or smartphone 11 is shown) - and other computing devices such as a smart watch or other wearable device may also be used) - to act either as a proxy for a physical payment card 6 or as a virtual payment card operating only in a digital domain. The smartphone 11 may achieve this with a mobile payment application and a digital wallet, as described below. The smart phone 11 can use these to transact with a merchant POS terminal 7 using NFC or another contactless technology, or to make a payment in association with its wallet service as discussed below. Additionally or alternatively, for a remote transaction, the smartphone 11 may also be able be able to interact with a merchant server 12 representing the merchant 2 over any appropriate network connection, such as the public internet - the connection to the merchant may be provided by an app or application on the computing device.

The transaction scheme infrastructure (hereafter simply referred to as 'transaction infrastructure') 5 here provides not only the computing infrastructure necessary to operate the card scheme and provide routing of transactions and other messaging to parties such as the acquirer 3 and the issuer 4, but also a wallet service / server 17 to support a digital wallet on the cardholder computing device; optionally, an internet gateway 18 is also provided to accept internet-based transactions for processing by the transaction infrastructure. This internet gateway 18 may be provided by a payment service provider, and in some arrangements the merchant 2 may interact with an internet gateway rather than directly with the acquirer. In other embodiments, the wallet service / server 17 may be provided similarly by a third party with an appropriate trust relationship with the transaction scheme provider. To support tokenization, a token service provider 19 is present (again, this is shown as part of transaction infrastructure 5 but may be provided by a third party with appropriate trust relationships), and the transaction infrastructure 5 provides a digital enablement service 16 to support the performance of tokenized digital transactions, and to interact with other elements of the system to allow transactions to be performed correctly - this digital enablement service may include other elements, such as token service provision. A processor device 20 associated with the issuer 4 may be provided within the transaction infrastructure 5. This issuer processor device 20 may handle "on behalf" services (such as authorisation) for the issuer 4.

The transaction infrastructure 5 further comprises a component 30, referred to herein as the payment switch, which is configured to route transaction messages between the issuer and the acquirer.

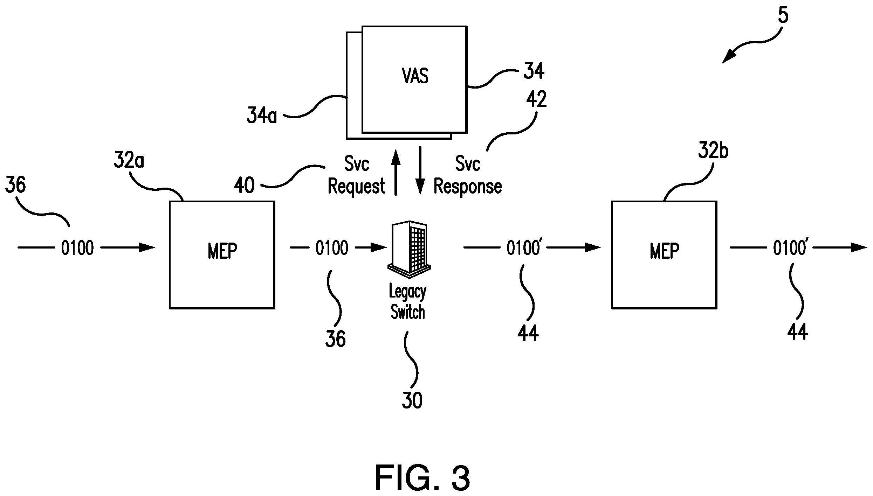

**Figure 3** shows the operation of a legacy payment switch 30 while processing a transaction request message.

Figure 3 shows the payment switch 30 that is present within the transaction infrastructure 5. Also shown are two network processors (32a, 32b) and a value added services system 34. The VAS system 34 is used to provide additional services to cardholders such as loyalty systems, the management of spend limits on transactions associated with a particular payment card and also the issue of transaction alerts to the card holder. It is noted that there may be multiple VAS systems (34... 34n) which may operate in parallel to enhance a received transaction message as discussed below.

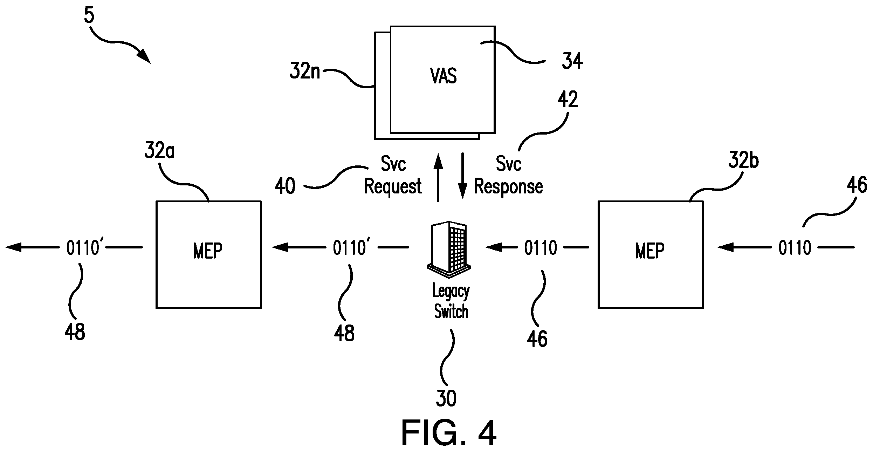

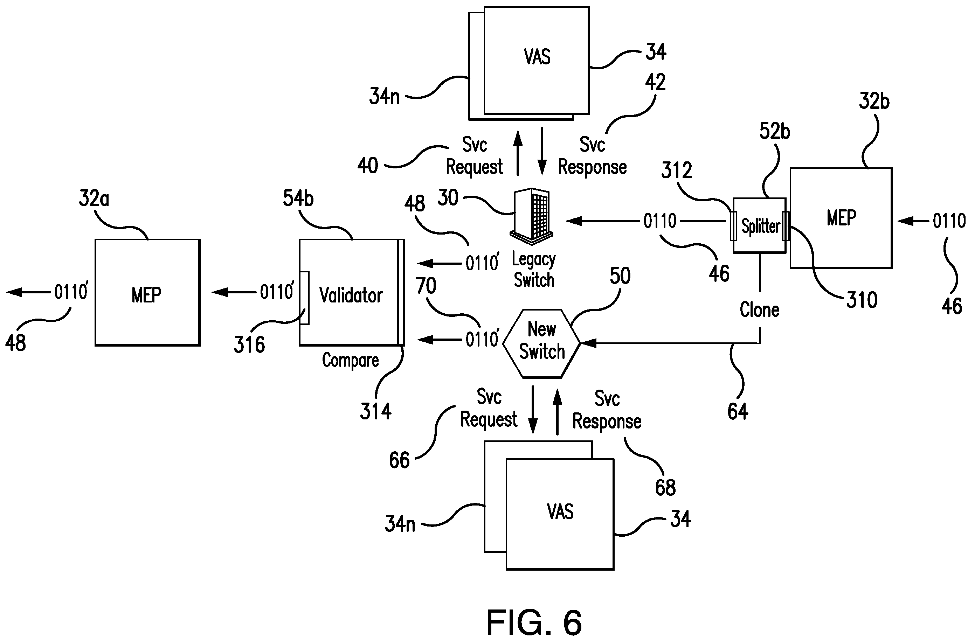

The network processors (32a, 32b) are located in bank branches belonging to the acquirer 3 and the issuer 4 respectively and are configured to send and receive transaction request messages 36 ("0100" messages) and transaction response messages 46 ("0110" messages, shown in Figures 4 and 6) between the issuer/ acquirer and the network switch 30.

In use, a transaction request message 36 that is generated by the acquirer 3 as a result of a cardholder transaction at a merchant is sent by the network processor 32a to the payment switch 30.

In one transaction system configuration, the payment switch 30 may determine the identity of the acquirer 3 and simply route the transaction request message 36 via the network processor 32b to the issuer 4. However, the payment switch 30 may be associated with a value added services system 34 and, upon receipt of the transaction request message 36 from the acquirer 3, the transaction switch 30 may send a service discovery request 40 to the VAS system 34. The service discovery request 40 may comprise the entire transaction request message 36 or may comprise selected information from the transaction request message such as the cardholder PAN associated with the transaction in question.

The VAS system 34, upon receipt of the service discovery request, looks up the cardholder PAN and determines if any value added services should be applied to the transaction request message 36.

The VAS system then returns a service response 42 to the payment switch 30 and the payment switch 30 then sends an enhanced transaction request message 44 (a 0100' format message) to the network processor 32b. The enhanced transaction request message 44 is then processed by the issuer 4.

It is noted that the payment switch 30 may be configured to create the enhanced transaction request message 44 (the 0100' message) based on the original transaction request message 36 and feedback from the VAS system 34. Although the process is described in relation to a single VAS system 34, it is noted that the payment switch 30 may be in communication with multiple VAS systems 34...34n (and so may create the enhanced transaction request message 44 on the basis of feedback from multiple VAS systems).

The payment switch 30 may therefore be configured to cache a copy of the transaction request message 36 that it sends to the VAS system(s) (34... 34n). When the VAS system(s) return a service response 42 then the payment switch 30 may be configured to create the enhanced transaction request message 44 by (i) incorporating data elements within the service response 42 into the transaction request message 36 (where there was no content in the data element in the original transaction request message) or (ii) replacing the data elements in the original transaction request message 36 with the data elements received by the VAS system(s).

Figure 4 shows the same transaction infrastructure as in Figure 3 but for a transaction response message process in which a transaction response message 46 (a "0110" format message) from the acquirer 3 is sent from the network processor 32b to the payment switch 30. As in Figure 3, the payment switch 30 may route the transaction response message directly to the network processor 32a associated with the issuer 4 or, if it is in communication with a VAS system 34, it may issue a service discovery request 40 to the VAS system.

Where a service discovery request 40 is received by the VAS system 34, a process similar to that described in relation to Figure 3 occurs in which the transaction response message 46 is enhanced with value added services associated with the PAN of the transaction card being used in the transaction. The enhanced transaction response message 48 (a 0110' format message) is then sent to the network processor 32a.

It is noted that "transaction request messages" 36 and "transaction response messages" 46, which are referred to herein as "transaction messages", comprise a plurality of data fields relating to the transaction that is being processed. The Primary Account Number (PAN) of the transaction card being used in the transaction is present in one of the data fields. Other data relating to the transaction appears in the other data fields for example the transaction card expiry date, the CVC, merchant details, transaction amount, transaction items etc.

Once the service response 42 has been received back from the VAS system 34 to the payment switch 30, one or more of the plurality of data fields in the transaction message may either have been changed or provided with new data relevant to the transaction being processed to produce an enhanced transaction message (either an enhanced transaction request message 44 or an enhanced transaction response message 48).

The value added services associated with a PAN within the VAS system 34 represent the "PAN properties". The PAN properties, in turn, comprise the PAN configuration (namely loyalty programme related data, transaction card spend limits, and transaction alert related information) and velocity data (the transaction history of the transaction card).

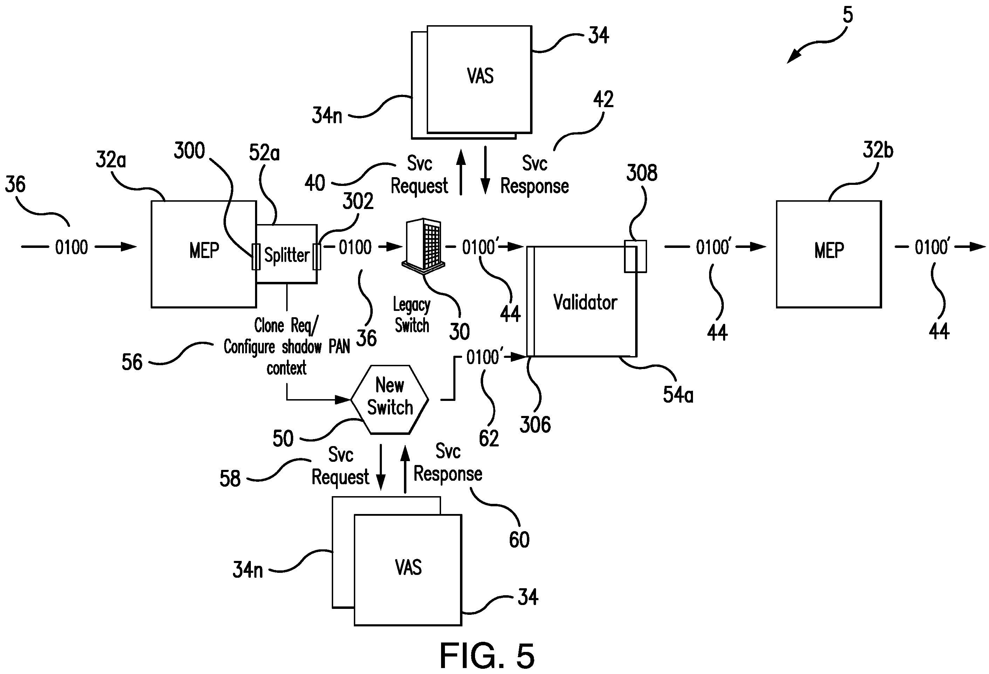

Figures 5 and 6 show a transaction infrastructure in accordance with an embodiment of the present disclosure in which a differential testing method according to an embodiment of the present disclosure is deployed to test the functionality of a (new) payment switch 50 within the production environment of the transaction system. Figure 5 shows the differential testing method according to an embodiment of the present disclosure as it is applied to a transaction request message 36 (a "0100" format message) and Figure 6 shows the differential testing method according to an embodiment of the present disclosure as it is applied to a transaction response message 46 (a "0110" format message).

As noted above, financial systems are subject to payment card industry data secure standard (PCI DSS) requirements and so a method is needed of testing the new payment switch without exposing or misrouting production environment card data transactions.

Within Figures 5 and 6, like features with Figures 3 and 4 are denoted by like reference numerals. Within Figure 5, a splitter component 52a is shown located between, and in communication with, the network processor 32a associated with the acquirer 3 and the existing payment switch 30, which is referred to in Figure 5 as the "legacy switch". A validator component 54a is also provided which is located between the legacy payment switch 30 and the network processor 32b associated with the issuer 4.

The splitter component 52a is additionally in communication with a new payment switch 50, the functionality of which needs to be tested before being deployed within the production environment of the transaction system 5 in place of the legacy switch 30. Likewise, the validator component 54a is additionally in communication with the new payment switch 50. The new payment switch 50 is in communication with the value added services system 34. For the sake of clarity in Figure 5 the value added services system 34 at the top of the figure is replicated at the bottom of the figure.

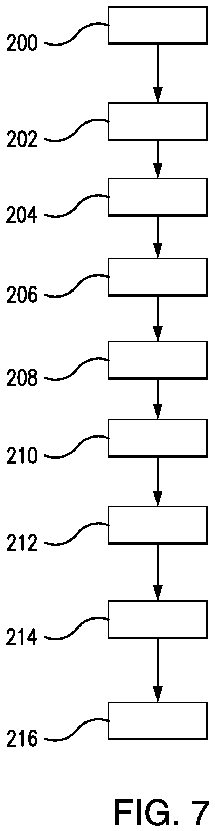

The splitter 52a comprises an input 300 and output 302 and the validator 54a comprises an input 306 and output 308 which are described in more detail in Figure 7.

In order to satisfy PCI DSS requirements when testing the functionality of the new payment switch 50, the differential testing method according to an embodiment of the present disclosure is configured to create a shadow or cloned PAN upon receiving a transaction message 36, the shadow/cloned PAN being configured to have the same PAN properties as the PAN that is contained within the transaction message 36. In particular, when the transaction message 36 is received from the acquirer 3, the splitter component 52a is configured to pass this received transaction response message 36 to the legacy switch 30 and also to create a shadow/cloned transaction response message 56 which is identical to the received transaction response message 36 with the exception that the PAN is replaced with a shadow/-cloned PAN.

The transaction response message 36 progresses through the legacy payment switch 30 in a manner similar to that described with reference to Figure 4 and an enhanced transaction response message 44 is sent to the validator component 54.

The shadow/cloned transaction response message 56 is sent to the new payment switch 50 which then sends a service discovery message 58 to the value added services system 34 and receives a service response 60 comprising value added services corresponding to the shadow PAN. An enhanced shadow transaction response message 62, comprising the shadow transaction response message 56 that has been enhanced with the value added services data returned by the VAS system 34, is then sent from the payment switch 50 to the validator component 54a.

The validator component 54a is then arranged to check the data fields of the two received enhanced messages (44, 62) to determine if there are any discrepancies.

Figure 6 shows the differential testing method according to embodiments of the present disclosure in respect of a transaction reply message received from an issuer. As shown in Figure 6 a splitter component 52b is associated with the network component 32b of the issuer 4 and a validator component 54b is associated with the network component of the acquirer 3. The splitter (52b) and validator (54b) components are, as in Figure 5, in communication with the payment switch 50 in addition to the legacy payment switch 30.

The splitter 52b comprises an input 310 and output 312 and the validator 54b comprises an input 314 and output 316 which are described in more detail in Figure 7.

It is noted that the splitter component 52b and validator component 54b of Figure 6 are essentially carrying out the same function as the splitter component 52a and validator component 54b shown in Figure 5, namely they are cloning a received transaction message and replacing the PAN contained therein with a shadow PAN.

In use, upon receiving a transaction response message 46 from the issuer 4, the splitter component 52b is configured to pass this received transaction response message 46 to the legacy switch 30 and also to create a shadow/cloned transaction response message 64 which is identical to the received transaction response message 46 with the exception that the PAN is replaced with a shadow/cloned PAN.

The transaction response message 46 progresses through the legacy payment switch 30 in a manner similar to that described with reference to Figure 4 and an enhanced transaction response message 48 is sent to the validator component 54b.

The shadow/cloned transaction response message 64 is sent to the new payment switch 50 which then sends a service discovery message 66 to the value added services system 34 and receives a service response 68 comprising value added services corresponding to the shadow PAN. An enhanced shadow transaction response message 70, comprising the shadow transaction response message 64 that has been enhanced with the value added services data returned by the VAS system 34, is then sent from the payment switch 50 to the validator component 54b.

The validator component 54 is then arranged to check the data fields of the two received enhanced messages (48, 70) to determine if there are any discrepancies.

In more detail the differential testing method according to the present disclosure is shown in Figure 7 and comprises the following:

In step 200, a transaction message (36, 46) is received at an input (300, 310) of the splitter component (52a, 52b). The transaction message (36, 46) comprises a plurality of data fields, one of the plurality of data fields comprising the PAN of the transaction card.

In step 202, the splitter component (52a, 52b) associates the PAN in the received transaction message with a shadow primary account number (shadow PAN), the shadow PAN replicating the format of the PAN. It is further noted that the shadow/cloned PAN that is created by the splitter component (52a, 52b) is arranged to have the same PAN properties as the PAN that is contained within the transaction request message (36, 46) that is received from the acquirer 3/issuer 4.

In step 204, the splitter component (52a, 52b) creates a shadow transaction message (56, 64) the shadow transaction message comprising a plurality of data fields, one of the plurality of data fields comprising the shadow PAN and the remaining data fields being a copy of the equivalent data fields in the received transaction message.

In step 206, the splitter component (52a, 52b) outputs the received transaction message (36, 46) from the output (302. 312) to the legacy switch 30.

In step 208, the splitter component (52a, 52b) outputs the shadow transaction message (56, 64) from the output (302. 312) to the payment switch 50. It is noted that steps 204 and 206 may occur in any order or simultaneously.

The legacy switch 30 receives the transaction request message (36, 46) from the splitter component (52a, 52b) and processes it as described above with relation to Figure 3 to create an enhanced transaction request message (44, 46). The new payment switch 50 receives the shadow/cloned transaction request message (56, 64) and sends a service discovery message (58, 66) to the value added services system 34.

The value added services system 34 processes the received service discovery request (58, 66) from the new payment switch 50 and returns, in a service response message (60, 68) back to the new payment switch 50, value added services associated with the shadow PAN in order to create an enhanced shadow transaction request message (62, 70) (a 0100' format message).

In step 210 the enhanced transaction request message (44, 48) is received at the input (306, 314) of the validator component (54a, 54b) and in step 212 the enhanced shadow transaction request message 62, 70 is received at the input (306, 314) of the validator component (54a, 54b).

In step 214, the validator component (54a, 54b) is configured to check the data fields of the received enhanced transaction message (44, 48) against the data fields of the enhanced shadow transaction message (62, 70) to determine if there are any discrepancies.

The enhanced transaction request message (44, 48) is passed from the output (308, 316) of the validator component (54a, 54b) to the network processor (32b, 32a) in a similar manner as described above the relation to Figure 3. The enhanced shadow transaction request message (62, 70) is held at the validator component (54a, 54b) and progresses no further through the transaction system 5.

The validator component (54a, 54b) outputs via the output (308, 316) a notification message in step 216 highlighting the presence of any discrepancies.

As noted above the splitter component (52a, 52b) is arranged to associate a shadow PAN with the PAN contained in the received transaction message (36, 46) and then to create a shadow transaction message (56, 64) which is data message comprising a plurality of data fields which are a clone of the data fields of the received transaction message apart from the substitution of the shadow PAN in place of the received PAN.

The received PAN has a data format in which: PAN = Bank Identification Number (BIN) + account identifier (PAN NR) + check digit.

In one embodiment the step of associating the PAN with a shadow PAN (step 202 in Figure 7) may comprise using a simple function to replace the original BIN with a shadow BIN such that:

Original PAN = Original BIN + Original PAN NR + Check digit

Shadow PAN = Shadow BIN + Original PAN NR + computed digit

For example, if the original PAN = 511111 + 123456789 + 0 then the BIN (511111) may be replaced with a shadow BIN of 211111 and the check digit recomputed, such that the shadow PAN = 211111 + 123456789 + 7.

In an alternative embodiment the step of associating the PAN with a shadow PAN (step 202 in Figure 7) may comprise replacing the received PAN with a randomly generated shadow PAN. It is noted that the shadow PAN may be generated as needed or alternatively a bank of shadow PANs may be generated in advance and retrieved and associated with a received PAN as required.

A shadow PAN may be associated with a received PAN every time a transaction message is received. Alternatively, the shadow PAN may be synchronised to reflect changes in the PAN properties within the VAS system such that the shadow PAN maintains the same PAN properties of the received PAN over time. In this way the same shadow PAN may be used in both a transaction request message and transaction response message.

The diagnostic method according to embodiments of the present disclosure may be run on a plurality of incoming transaction messages until all transaction types have been "seen" by the new payment switch 50 and the performance of the payment switch 50 has been assessed by the validator component (54a, 54b) in each case. The diagnostic method according to embodiments of the present disclosure may additionally be run on sufficient incoming transaction messages such that the payment switch 50 has been tested against each data field within the received transaction message.

In the above discussion a cardholder's PAN is replaced with a shadow PAN. In the event that the received transaction message comprises a token PAN (e.g. an Apple Pay token PAN) instead of the actual transaction card's PAN then the method according to the present disclosure may additionally recover the actual card PAN before creating the shadow transaction message. In such cases an initial value added service system may be arranged to check the token PAN and retrieve the actual PAN before enriching the transaction message with the actual PAN. The transaction message may then proceed through the above process containing both the token and real PANs in different data elements of the transaction message. Subsequent value added services may operate on either the real or token PAN. When creating the shadow PAN the method according to the present disclosure may create a shadow token PAN and a shadow (real) PAN.

References above to the transaction message comprising the PAN of the transaction card should be understood to relate to the actual card PAN or a token PAN that is associated with the actual card PAN (e.g. a token PAN as in the Apple Pay system). The created shadow transaction message should be understood to encompass shadow transaction messages comprising both the shadow PAN and, in the event the received transaction message comprised a token PAN, a shadow token PAN.

**Claims**

1. A computer-implemented method of testing a transaction component (50) within a production environment of a transaction system (5) against a legacy transaction component (30), the transaction component being configured to route transaction messages between an issuer and an acquirer during a cardholder transaction using a transaction card having a primary account number, PAN, the method comprising:

   receiving (200) a transaction message (36), the transaction message comprising a plurality of data fields, one of the plurality of data fields comprising the PAN of the transaction card;
   associating (202) the PAN with a shadow primary account number, PAN, the shadow PAN replicating the format of the PAN;
   creating (204) a shadow transaction message (56), the shadow transaction message comprising a plurality of data fields, one of the plurality of data fields comprising the shadow PAN;
   sending (206) the received transaction message (36) to the legacy transaction component (30) for processing;
   sending (208) the shadow transaction message (56) to the transaction component (50) for processing;
   receiving (210) a processed transaction message (44) from the legacy component (30);
   receiving (212) a processed shadow transaction message (62) from the transaction component (50);
   comparing (214) the data fields of the processed transaction message and processed shadow transaction message for any discrepancies
   wherein the PAN is associated with one or more PAN properties within a value added services system (34) and the shadow PAN is configured to replicate the PAN properties of the PAN, the method comprising:
   sending a request to a value added services system to provide notification of any updates to the PAN properties of the PAN and, upon receiving a notification from the value added services system (34), updating the configuration of the shadow PAN to match the updated PAN properties of the PAN.

2. A method as claimed in Claim 1, wherein the transaction component (50) comprises a payment switch and the legacy component (30) comprises a legacy payment switch.

3. A method as claimed in Claim 1 or Claim 2, wherein the shadow transaction message (56) is configured to replicate all the data fields of the received transaction message apart from the replacement of the PAN with the shadow PAN.

4. A method as claimed in Claim 1, wherein the PAN properties comprise PAN configuration and PAN velocity data, the PAN configuration property comprising one or more of: loyalty scheme related data; transaction card spend limit settings; transaction alert notification settings and the PAN velocity property comprising the transaction history of the transaction card.

5. A method as claimed in any preceding claim, wherein the transaction message (36, 46)) is a transaction request message (36) received from a network component associated with the acquirer (3) or the transaction message (46) is a transaction response message received from a network component associated with the issuer (4).

6. A method as claimed in Claim 5, wherein the transaction system comprises a splitter component (52a) configured to receive the transaction message (36) from the network component, associate the PAN with the shadow PAN, create the shadow transaction message (56) and send the received transaction message (36) to the legacy payment component (30) and shadow transaction message to the payment component (50).

7. A method as claimed in Claim 5 or 6, wherein the transaction system comprises a validator (54a) component which is configured to receive the processed transaction message (44) from the legacy component (30) and processed shadow transaction message (62) from the payment component (50) and to compare the data fields of the processed transaction message and processed shadow transaction message for any discrepancies.

8. A method as claimed in any preceding claim, wherein associating the PAN with the shadow PAN comprises mapping the PAN to the shadow PAN.

9. A method as claimed in any one of Claims 1 to 7, wherein associating the PAN with the shadow PAN comprises generating the shadow PAN using a random number generator and storing an association between the PAN and shadow PAN.

10. A method as claimed in any preceding claim, comprising repeating the testing of the payment component (50) by receiving further transaction messages and sending further shadow transaction messages to the transaction component until a predefined range of transaction messages have been received.

11. A method as claimed in any preceding claim, comprising repeating the testing of the payment component (50) by receiving further transaction messages and sending further shadow transaction messages to the transaction component until a predetermined number of data field types have been tested.


**Patentansprüche**

1. Computerimplementiertes Verfahren zum Testen einer Transaktionskomponente (50) innerhalb einer Produktionsumgebung eines Transaktionssystems (5) gegenüber einer Alt-Transaktionskomponente (30), wobei die Transaktionskomponente so konfiguriert ist, dass sie während einer Karteninhaber-Transaktion unter Verwendung einer Transaktionskarte mit einer Primärkontonummer, PAN, Transaktionsnachrichten zwischen einem Aussteller und einem Erwerber weiterleitet, wobei das Verfahren umfasst:

Empfangen (200) einer Transaktionsnachricht (36), wobei die Transaktionsnachricht eine Vielzahl von Datenfeldern umfasst, wobei eines der Vielzahl von Datenfeldern die PAN der Transaktionskarte umfasst;
Zuordnen (202) der PAN zu einer Schatten-Primärkontonummer, PAN, wobei die Schatten-PAN das Format der PAN repliziert;
Erzeugen (204) einer Schatten-Transaktionsnachricht (56), wobei die Schatten-Transaktionsnachricht eine Vielzahl von Datenfeldern umfasst, wobei eines der Vielzahl von Datenfeldern die Schatten-PAN umfasst;
Senden (206) der empfangenen Transaktionsnachricht (36) an die Alt-Transaktionskomponente (30) zur Verarbeitung;

Senden (208) der Schatten-Transaktionsnachricht (56) an die Transaktionskomponente (50) zur Verarbeitung;

Empfangen (210) einer verarbeiteten Transaktionsnachricht (44) von der Alt-Komponente (30);

Empfangen (212) einer verarbeiteten Schatten-Transaktionsnachricht (62) von der Transaktionskomponente (50);

Vergleichen (214) der Datenfelder der verarbeiteten Transaktionsnachricht und der verarbeiteten Schatten-Transaktionsnachricht bezüglich etwaiger Diskrepanzen,

wobei die PAN mit einer oder mehreren PAN-Eigenschaften innerhalb eines Mehrwertdienstsystems (34) assoziiert ist und die Schatten-PAN so konfiguriert ist, dass sie die PAN-Eigenschaften der PAN repliziert, wobei das Verfahren Folgendes umfasst:

Senden einer Anfrage an ein Mehrwertdienstsystem, um eine Benachrichtigung über alle Aktualisierungen der PAN-Eigenschaften der PAN bereitzustellen, und, nach Empfangen einer Benachrichtigung von dem Mehrwertdienstsystem (34), Aktualisieren der Konfiguration der Schatten-PAN, um den aktualisierten PAN-Eigenschaften der PAN zu entsprechen.

2. Verfahren nach Anspruch 1, wobei die Transaktionskomponente (50) einen Zahlungsschalter umfasst und die Alt-Komponente (30) einen Alt-Zahlungsschalter umfasst.

3. Verfahren nach Anspruch 1 oder Anspruch 2, wobei die Schatten-Transaktionsnachricht (56) so konfiguriert ist, dass sie alle Datenfelder der empfangenen Transaktionsnachricht mit Ausnahme des Ersetzens der PAN durch die Schatten-PAN repliziert.

4. Verfahren nach Anspruch 1, wobei die PAN-Eigenschaften PAN-Konfigurations- und PAN-Geschwindigkeitsdaten umfassen, wobei die PAN-Konfigurationseigenschaft eine oder mehrere der folgenden Eigenschaften umfasst: Treueprogramm-bezogene Daten; Transaktionskarten-Ausgabenlimit-Einstellungen; Transaktionsalarm-Benachrichtigungseinstellungen, und die PAN-Geschwindigkeitseigenschaft die Transaktionshistorie der Transaktionskarte umfasst.

5. Verfahren nach einem der vorstehenden Ansprüche, wobei die Transaktionsnachricht (36, 46) eine Transaktionsanforderungsnachricht (36) ist, die von einer dem Erwerber (3) zugeordneten Netzwerkkomponente empfangen wird, oder die Transaktionsnachricht (46) eine Transaktionsantwortnachricht ist, die von einer dem Aussteller (4) zugeordneten Netzwerkkomponente empfangen wird.

6. Verfahren nach Anspruch 5, wobei das Transaktionssystem eine Splitterkomponente (52a) umfasst, die so konfiguriert ist, dass sie die Transaktionsnachricht (36) von der Netzwerkkomponente empfängt, die PAN der Schatten-PAN zuordnet, die Schatten-Transaktionsnachricht (56) erzeugt und die empfangene Transaktionsnachricht (36) an die Alt-Zahlungskomponente (30) sendet und die Schatten-Transaktionsnachricht an die Zahlungskomponente (50) sendet.

7. Verfahren nach Anspruch 5 oder 6, wobei das Transaktionssystem eine Validierungskomponente (54a) umfasst, die so konfiguriert ist, dass sie die verarbeitete Transaktionsnachricht (44) von der Alt-Komponente (30) und die verarbeitete Schatten-Transaktionsnachricht (62) von der Zahlungskomponente (50) empfängt und die Datenfelder der verarbeiteten Transaktionsnachricht und der verarbeiteten Schatten-Transaktionsnachricht bezüglich etwaiger Diskrepanzen vergleicht.

8. Verfahren nach einem der vorstehenden Ansprüche, wobei das Zuordnen der PAN zu der Schatten-PAN das Abbilden der PAN auf die Schatten-PAN umfasst.

9. Verfahren nach einem der Ansprüche 1 bis 7, wobei das Zuordnen der PAN zu der Schatten-PAN das Erzeugen der Schatten-PAN unter Verwendung eines Zufallszahlengenerators und das Speichern einer Zuordnung zwischen der PAN und der Schatten-PAN umfasst.

10. Verfahren nach einem der vorstehenden Ansprüche, umfassend das Wiederholen des Testens der Zahlungskomponente (50) durch Empfangen weiterer Transaktionsnachrichten und Senden weiterer Schatten-Transaktionsnachrichten an die Transaktionskomponente, bis ein vordefinierter Bereich von Transaktionsnachrichten empfangen worden ist.

11. Verfahren nach einem der vorstehenden Ansprüche, umfassend das Wiederholen des Testens der Zahlungskomponente (50) durch Empfangen weiterer Transaktionsnachrichten und Senden weiterer Schatten-Transaktionsnachrichten an die Transaktionskomponente, bis eine vorbestimmte Anzahl von Datenfeldtypen getestet worden ist.

**Revendications**

1. Procédé informatique pour tester un élément de transaction (50) dans le cadre d'un environnement de production d'un système transactionnel (5), relativement à un élément de transaction hérité (30), l'élément de transaction étant configuré pour acheminer des messages de transaction entre un émetteur et un acquéreur au cours d'une transaction d'un titulaire de carte à l'aide d'une carte de transaction portant un numéro de compte principal, PAN, le procédé comprenant :

   la réception (200) d'un message de transaction (36), le message de transaction comprenant une pluralité de champs de données, l'un de la pluralité de champs de données comprenant le PAN de la carte de transaction ;
   l'association (202) du PAN à un numéro de compte principal, PAN, fantôme, le PAN fantôme reproduisant le format du PAN ;
   la création (204) d'un message de transaction fantôme (56), le message de transaction fantôme comprenant une pluralité de champs de données, l'un de la pluralité de champs de données comprenant le PAN fantôme ;
   l'envoi (206) du message de transaction reçu (36) à l'élément de transaction hérité (30) pour son traitement ;
   l'envoi (208) du message de transaction fantôme (56) à l'élément de transaction (50) pour son traitement ;
   la réception (210), de l'élément hérité (30), d'un message de transaction traité (44) ;
   la réception (212), de l'élément de transaction (50), d'un message de transaction fantôme traité (62) ;
   la comparaison (214) des champs de données du message de transaction traité et du message de transaction fantôme traité en cas d'anomalies
   le PAN étant associé à une ou plusieurs propriétés du PAN dans le cadre d'un système de services à valeur ajoutée (34), et le PAN fantôme étant configuré pour répliquer les propriétés PAN du PAN, le procédé comprenant :
   l'envoi d'une demande à un système de services à valeur ajoutée pour fournir une notification d'éventuelles mises à jour des propriétés PAN du PAN et, à la réception d'une notification du système de services à valeur ajoutée (34), la mise à jour de la configuration du PAN fantôme afin qu'elle corresponde aux propriétés PAN mises à jour du PAN.

2. Procédé selon la revendication 1, l'élément de transaction (50) comprenant un commutateur de paiement et le composant hérité (30) comprenant un commutateur de paiement hérité.

3. Procédé selon la revendication 1 ou la revendication 2, le message de transaction fantôme (56) étant configuré pour répliquer tous les champs de données du message de transaction reçu, excepté la substitution du PAN par le PAN fantôme.

4. Procédé selon la revendication 1, les propriétés PAN comprenant des données de configuration PAN et de vitesse PAN, la propriété de la configuration PAN comprenant une ou plusieurs des suivantes : données relatives au programme de fidélité ; paramètres de limite de dépenses de la carte de transaction ; paramètres de notification d'alerte de transaction et la propriété de vitesse PAN comprenant l'historique des transactions de la carte de transaction.

5. Procédé selon l'une quelconque des revendications précédentes, le message de transaction (36, 46) étant un message de demande de transaction (36) reçu d'un composant de réseau associé à l'acquéreur (3) ou le message de transaction (46) étant un message de réponse de transaction reçu d'un composant de réseau associé à l'émetteur (4).

6. Procédé selon la revendication 5, le système de transaction comprenant un élément splitter (52a) configuré pour recevoir le message de transaction (36) du composant de réseau, associer le PAN au PAN fantôme, créer le message de transaction fantôme (56), et envoyer le message de transaction reçu (36) à l'élément de paiement hérité (30) et le message de transaction fantôme à l'élément de paiement (50).

7. Procédé selon la revendication 5 ou 6, le système de transaction comprenant un composant validateur (54a) configuré pour recevoir le message de transaction traité (44) de l'élément hérité (30) et le message de transaction fantôme traité (62) de l'élément de paiement (50), et pour comparer les champs de données du message de transaction traité et du message de transaction fantôme traité en cas d'anomalie.

8. Procédé selon l'une quelconque des revendications précédentes, l'association du PAN avec le PAN fantôme comportant la mise en correspondance du PAN avec le PAN fantôme.

9. Procédé selon l'une quelconque des revendications 1 à 7, l'association du PAN avec le PAN fantôme comportant la génération du PAN fantôme à l'aide d'un générateur de nombres aléatoires et le stockage d'une corrélation entre le PAN et le PAN fantôme.

10. Procédé selon l'une quelconque des revendications précédentes, comportant la répétition de l'essai de l'élément de paiement (50) en recevant d'autres messages de transaction et l'envoi d'autres messages de transaction fantômes à l'élément de transaction jusqu'à ce qu'une série prédéterminée de messages de transaction ait été reçue.

11. Procédé selon l'une quelconque des revendications précédentes, comportant la répétition de l'essai de l'élément de paiement (50) en recevant d'autres messages de transaction et l'envoi d'autres messages de transaction fantômes à l'élément de transaction jusqu'à ce qu'un nombre prédéterminé de types de champs de données ait été testé.

100

5 → SWITCH

Funds and transaction details

Funds and transaction details

4 → ISSUER

3 → ACQUIRER

Settle payment

Funds

1 CARDHOLDER

2 MERCHANT

Transaction

Goods/services

# FIG. 1

FIG. 2

FIG. 3

EP 4 411 550 B1

FIG. 4

FIG. 5

FIG. 6

FIG. 7

**EP 4 411 550 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 9836388 B
- US 2015127547 A